# EUROPÄISCHE PATENTSCHRIFT

(11) **EP 0 511 509 B1**
(45) Veröffentlichungstag und Bekanntmachung des Hinweises auf die Patenterteilung: **26.06.1996**
(21) Anmeldenummer: 92105641.2
(22) Anmeldetag: 02.04.1992
(51) Int. Cl.: G02B 6/44, H02G 15/076, G02B 6/36

(54) **Haubenmuffe zur Verbindung der Lichtwellenleiter (LWL) von LWL-Erdseilen und LWL-Kabeln**
Cap-coupling box for connecting lightwave guides of LWG-earthcables and LWG cables
Manchon-chapeau pour la connexion des guides d'ondes optiques (GOO) et des câbles GOO terrestres et câbles GOO

(30) Priorität: 29.04.1991 DE 9105245 U
(43) Veröffentlichungstag der Anmeldung: 04.11.1992
(73) Patentinhaber: Felten & Guilleaume Energietechnik AG, D-51058 Köln (DE)
(72) Erfinder: Siegert, Wolfgang, W-5860 Iserlohn 7 (DE); Kastl, Robert, W-5060 Bergisch Gladbach 1 (DE); Schindler, Bernhard, Dipl.-Ing., W-5210 Troisdorf (DE); Beck, Manfred, Dipl.-Ing., W-5000 Köln 90 (DE)

(56) Entgegenhaltungen:
- EP-A- 0 159 857
- WO-A-90/05318
- WO-A-90/06531
- WO-A-91/07680
- DE-U- 9 104 044
- DE-U- 9 105 245
- FR-A- 2 670 586

## Beschreibung

Die Erfindung betrifft eine Haubenmuffe zur Verbindung der Lichtwellenleiter (LWL) von LWL-Erdseilen und LWL-Kabeln mit folgendem Aufbau: a) Gehäuseunterteil eine runde Platte, an ihr hinten (mastseitig) eine nach unten gerichtete Platte zur Mastbefestigung und davor die Einführungen für das jeweilige Seil oder Kabel, und b) auf der Gehäuseplatte ein Ständer für die Leiterspleiße und darüber eine Haube mit ihrem Haltebügel. Der Muffenwerkstoff ist eine korrosionsbeständige Aluminiumlegierung.

Beispiele von Haubenmuffen sind aus der WO 90/05318 und der EP 0511857 B1 bekannt. In beiden Fällen handelt es sich um Haubenmuffen für optische Datenübertragungskabel. Solche Haubenmuffen haben Einführungsöffnungen für LWL-Kabel und Einrichtungen zur Unterbringung von Überlängen von LWLs und ihrer Spleiße (Spleißkassetten). Die Haube soll einfach abnehmbar sein, damit ein schneller Zugang zum Inneren möglich sit. Vorrichtungen zur Befestigung am Installationsort für diese Typen von Haubenmuffen sind nicht vorgesehen, weil diese Haubenmuffen in der Regel in geschlossenen Installationskästen untergebracht werden, so daß weder zusätzlicher Schutz noch zusätzliche Befestigungelemente erforderlich sind.

Für den Einsatz einer Haubenmuffe für Lichtwellenleiter-Erdseile treten zusätzliche Anforderungen auf. Einerseits erhöhte Schutzanforderung wegen der Unterbringung im Freien und andererseits sind Elemente zur Befestigung der Haubenmuffe an einem Mast, Erdseilbefestigungs- und/oder Zugentlastungselemente notwendig.

Eine solche Haubenmuffe ist in dem Prospekt "Selbsttragende Fernmelde-Luftkabel" (SLK) der Felten & Guilleaume Carlswerk AG 04.76 als Verbindungsmuffe für Mastbefestigung angegeben. Sie dient zur Verbindung von zwei selbsttragenden Fernmelde-Luftkabeln (Freileiter-Erdseilen mit integrierten elektrischen Nachrichtenleitern) oder zur Verbindung von selbsttragenden Fernmelde-Luftkabeln mit Einführungskabeln, welche den Endpunkt der SLK-Strecke mit den Schutzeinrichtungen verbinden. Die Haube ist abnehmbar mit einem Spannbügel gehalten. Ein Polyethylen-Formteil isoliert die Spleißstelle hochspannungsfest gegen das Metallgehäuse. Die Abdichtung zwischen Muffenboden und Haube erfolgt mit einer O-Ringdichtung. Der Muffenboden mit Kabelbuchsen wird nach Einführung der Kabel mit kalthartender Bitumenmasse ausgegossen und hermetisch abgedichtet.

LWL-Erdseile sind dagegen Freileiter-Erdseile mit integrierten Lichtwellenleitern. Die LWL-Kabel dienen hier zur Verbindung der LWL-Erdseile mit den entsprechenden Stationen bzw. Geräten, und sie sind in der DE-U1-91 02 185 beschrieben.

Der Erfindung liegt die Aufgabe zugrunde, eine Haubenmuffe zur Verbindung der Lichtwellenleiter von LWL-Erdseilen und LWL-Verbindungskabeln anzugeben, die vielseitig einsetzbar und einfach in Aufbau, Herstellung und Montage ist.

Diese Aufgabe wird durch die kennzeichnenden Merkmale des Anspruchs 1 gelöst. Die Merkmale der Haubenmuffe sind im wesentlichen, daß a) an die runde Gehäuseplatte des Gehäuseunterteils mastseitig eine (in Einbaulage) nach unten gerichtete rechteckige Mastbefestigungsplatte geschraubt ist, b) sich in der Gehäuseplatte symmetrisch zur Plattenmitte mehrere öffnungen befinden, in die je eine als Adapter für ein bestimmtes Seil oder Kabel ausgebildete Einführungshülse eingeschraubt ist, c) in den Fuß jeder Einführungshülse eine Seilverschraubung eingesetzt ist, und d) am Fuß der Mastbefestigungsplatte unterhalb jeder Seilverschraubung eine Seilbefestigungsklammer angebracht ist.

Weiterbildungen der Erfindung sind in den abhängigen Ansprüchen angegeben.

Ein Ausführungsbeispiel der Erfindung wird anhand der Figuren 1 bis 3 erlautert. Gezeigt ist eine Haubenmuffe zur Verbindung der Lichtwellenleiter von LWL-Erdseilen mit vier Einführungsöffnungen, und zwar in
- Fig. 1 in Seitenansicht (teilweise geschnitten), mit zwei Einführungshülsen,
- Fig. 2 in Vorderansicht im Schnitt (teilweise versetzt), mit vier Einführungshülsen, und
- Fig. 3 in Bodenansicht, mit zwei Einführungshülsen.

Aus den Figuren ist ersichtlich, daß a) das Gehäuseunterteil der Muffe die runde Platte 1 ist und daran die rechteckige Platte 6 zur Mastbefestigung geschraubt ist, daß b) sich in der Gehäuseplatte 1 symmetrisch zur Plattenmitte vier runde Öffnungen befinden, in welche jeweils die - als Adapter für ein bestimmtes Seil oder Kabel ausgebildete - Einführungshülse 3 eingeschraubt und mittels des Runddichtrings 2 abgedichtet ist, daß c) in den Fuß jeder Einführungshülse 3 die Seilverschraubung 5 eingesetzt ist, in der die Zugentlastung 4 integriert ist, und daß d) am Fuß der Mastbefestigungsplatte 6 unterhalb jeder Seilverschraubung 5 die Seilbefestigungsklammer 7 bzw. 8 angebracht ist, wobei die Klammern 7 und 8 auf einem in die Platte 6 geschraubten Tragbolzen sitzen.

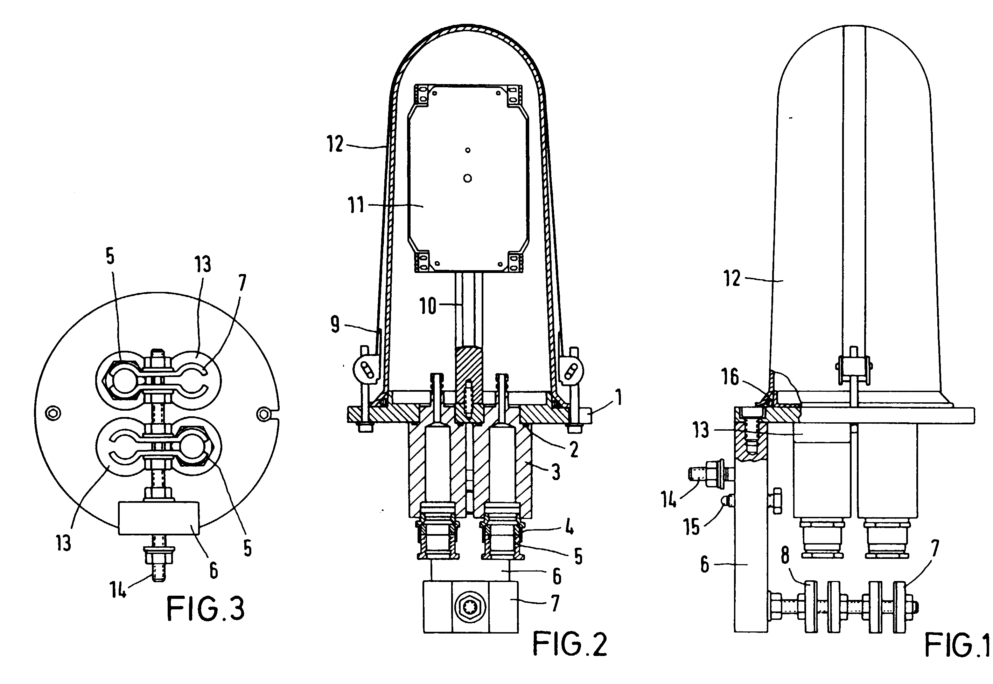

Aus den Fig. 1 und 3 ist ersichtlich, daß die beiden nicht benutzten Einführungsöffnungen jeweils mit der Blindschraube 13 und dem Runddlichtring 2 verschlossen sind. - Weiter ist ersichtlich, daß in der Mastbefestigungsplatte 6 auf Höhe der Einführungshülsen 3 die Befestigungsschraube 14 samt Mutter und darunter die Verdrehsicherungsschraube 15 angeordnet sind.

Aus Fig. 2 ist ersichtlich, daß a) in der Mitte der Gehäuseplatte 1 der verstellbarer Ständer 10 angeordnet ist, der die Spleißkassette 11 für die LWL-Spleiße trägt, und daß b) auf die Gehäuseplatte 1 die Haube 12 aufgesetzt, mittels des Runddichtrings 16 abgedichtet und mittels des Spannbandes 9, dessen beide Enden mittels Spannschrauben mit der Gehäuseplatte 1 verbunden sind, auf der Platte gehaltert ist.

Die erfindungsgemäße Muffe hat folgende Vorteile: a) kein Spritzguß des Gehäuseunterteils, b) kein Vergießen des Gehäuseunterteils zur Abdichtung, c) leichte und schnelle Montage der Muffe und d) Möglichkeit nachträglicher Seileinführungen (maximal 4 öffnungen) ohne Aufwand.

### Bezugszeichenliste

- 1: runde Gehäuseplatte
- 2: Runddichtring zur Einführungshülse
- 3: Einführungshülse (Adapter) für Seil oder Kabel
- 4: Integrierte Zugentlastung
- 5: Seilverschraubung
- 6: Platte zur Mastbefestigung (rechteckig)
- 7: Seilbefestigungsklemme vorn
- 8: Seilbefestigungsklemme hinten (mastseitig)
- 9: Halte-Spannband für Haube
- 10: Verstellbarer Ständer (Kassettenträger)
- 11: Spleißkassette für die LWL-Spleiße
- 12: Muffenhaube
- 13: Verschlußschraube (Blndverschluß einer Einführungsöffnung)
- 14: Befestigungsschraube (Mastbefestigung)
- 15: Verdrehsicherungsschraube
- 16: Runddichtring zur Haube.

## Patentansprüche

1. Haubenmuffe zur Verbindung der Lichtwellenleiter von Lichtwellenleiter-Erdseilen und Lichtwellenleiter-Kabeln mit folgendem Aufbau:
eine rechteckige Mastbefestigungplatte (**6**) mit einem senkrecht zur Mastbefestigungplatte (**6**) angeschraubten Tragbolzen, auf dem mindestens zwei Seilbefestigungsklammern (**7**,**8**) angebracht sind;
eine runde Gehäuseplatte (**1**), die in einem Randbereich an die Mastbefestigungsplatte (**6**) angeschraubt ist, so daß die beiden Platten (**1**,**6**) einen rechten Winkel einschließen und der Tragbolzen parallel zur Gehäuseplatte (**1**) ist, und wobei sich in der Gehäuseplatte (**1**) symmetrisch zur Plattenmitte mindestens zwei runde Öffnungen befinden, die den Seilbefestigungsklammern (**7**,**8**) gegenüber liegen, in jede Öffnung ist eine als Adapter für ein bestimmtes Seil oder Kabel ausgebildete Einführungshülse (**3**) eingeschraubt und mittels Runddichtring (**2**) abgedichtet und in den Fuß jeder Einführungshülse (**3**) ist eine Seilverschraubung (**5**) eingesetzt, in der eine Zugentlastung (**4**) integriert ist;
ein Ständer (**10**), der in der Mitte der Gehäuseplatte (**1**) angeordnet ist und mindestens eine Lichtwellenleiter-Spleißkassette (**11**) trägt; und
eine Haube (**12**), die auf der Gehäuseplatte (**1**) befestigt ist.

2. Haubenmuffe nach Anspruch 1, wobei in der Gehäuseplatte (**1**) vier Einführungsöffnungen angeordnet sind, und jede nicht benutzte Öffnung mit einer Blindschraube (**13**) und einem Runddichtring (**2**) verschließbar ist.

3. Haubenmuffe nach einem der Ansprüche 1 oder 2, wobei der Ständer (**10**) verstellbar ist.

4. Haubenmuffe nach einem der vorhergehenden Ansprüche, wobei die Haube (**12**) mittels Runddichtring (**16**) gegen die Gehäuseplatte (**1**) abgedichtet und mittels eines Spannbands (**9**), dessen beide Enden mittels Spannschrauben mit der Gehäuseplatte (**1**) verbunden sind, auf der Gehäuseplatte (**1**) gehaltert ist.

5. Haubenmuffe nach einem der vorhergehenden Ansprüche, wobei in der Mastbefestigungplatte (**6**) auf Höhe der Einführungshülsen (**3**) eine Befestigungsschraube (**14**) samt Mutter und zwischen Befestigungsschraube (**14**) und Tragbolzen eine Verdrehsicherungsschraube (**15**) angeordnet sind.

6. Haubenmuffe nach einem der vorhergehenden Ansprüche, wobei der Muffenwerkstoff eine korrosionsbeständige Aluminumlegierung ist.

## Claims

1. A cap-coupling box for connecting the lightwave guides (LWG) of LWG earth cables and LWG cables with the following construction:
a rectangular mast mounting plate (6) with a support bolt bolted perpendicularly onto the mast mounting plate (6), on which at least two cable clamps (7,8) are fitted;
a round housing plate (1) bolted onto the mast mounting plate (6) in an edge region, so that the two plates (1,6) form a right angle and the support bolt is parallel to the housing plate (1), whereby at least two round openings are arranged in the housing plate (1) symmetrically to the plate centre and opposite to the cable clamps (7,8); screwed into each opening is an insertion sleeve (3) formed as an adapter for a particular wire rope or cable and sealed with an O-ring (2), and inserted into the foot of each insertion sleeve (3) is a cable screw-fitting (5) in which a strain relief (4) is integrated;
a support (10) arranged in the middle of the housing plate (1), supporting at least one LWG splice box (11);
and a cap (12) fixed to the housing plate (1).

2. A cap-coupling box according to Claim 1, whereby four insertion openings are arranged in the housing plate (1) and each unused opening can be closed off with a blanking screw (13) and O-ring (2).

3. A cap-coupling box according to one of Claims 1 or 2, whereby the support (10) is adjustable.

4. A cap-coupling box according to one of the above claims, whereby the cap (12) is sealed with respect to the housing plate (1) by an O-ring (16) and is affixed to the housing plate (1) by means of a tensioner (9) whose two ends are connected to the housing plate (1) with tensioning screws.

5. A cap-coupling box according to one of the above claims, whereby a mounting bolt (14) with nut is arranged in the mast mounting plate (6) at the level of the insertion sleeves (3), and a locking screw (15) is arranged between the mounting bolt (14) and support bolt.

6. A cap-coupling box according to one of the above claims, whereby the box material is a corrosion-resistant aluminium alloy.

## Revendications

1. Manchon-chapeau pour la connexion de guides d'ondes optiques et de câbles terrestres à guides d'ondes optiques et de câbles à guides d'ondes optiques, ayant la construction suivante :
- une plaque de fixation de mât (6), rectangulaire, avec un goujon de support vissé à la plaque de fixation de mât (6), sur lequel il y a au moins deux pinces de fixation de câble (7, 8) ;
- une plaque de boîtier ronde (1) vissée dans une zone de bord à la plaque de fixation de mât (6) de façon que les deux plaques (1, 6) fassent entre elles un angle droit et que le goujon de support soit parallèle à la plaque de boîtier (1), et dans la plaque de boîtier (1), symétriquement au milieu de la plaque, il y a au moins deux orifices ronds en regard des pinces de fixation de câble (7, 8), et chaque orifice reçoit un manchon d'introduction (3) en forme d'adaptateur pour un certain câble vissé et rendu étanche par un joint d'étanchéité périphérique (2), et dans le pied de chaque manchon d'introduction (3), on a placé un moyen de vissage de câble (5) intégré au moyen de soutien de traction (4) ;
- un support (10) prévu au milieu de la plaque de boîtier (1) et portant au moins un boîtier à épissures pour le guide d'ondes optiques (11) ; et
- un chapeau (12) fixé à la plaque de boîtier (1).

2. Manchon-chapeau selon la revendication 1, dans lequel la plaque de boîtier (1) comporte quatre orifices d'entrée, et chaque orifice non utilisé est fermé par une vis à tête fraisée (13) et un joint d'étanchéité (2).

3. Manchon-chapeau selon l'une des revendications 1 ou 2, dans lequel le support (10) est réglable.

4. Manchon-chapeau selon l'une des revendications précédentes, dans lequel le chapeau (12) est rendu étanche par rapport à la plaque de boîtier (1) au moyen d'un joint d'étanchéité périphérique (16), et est maintenu à l'aide d'un ruban de serrage (9) sur la plaque de boîtier (1), ruban dont les deux extrémités sont reliées par des vis de serrage à la plaque de boîtier (1).

5. Manchon-chapeau selon l'une des revendications précédentes, dans lequel, dans la plaque de fixation de mât (6) à hauteur des manchons d'introduction (3), il y a une vis de fixation (14) y compris l'écrou, et entre la vis de fixation (14) et le goujon de support, on a une vis de blocage en rotation (15).

6. Manchon-chapeau selon l'une des revendications précédentes, dans lequel le matériau du manchon est un alliage d'aluminium résistant à la corrosion.
